# DEMANDE DE BREVET EUROPEEN

(11) **EP 2 886 194 A1**
(43) Date de publication de la demande: **24.06.2015**
(21) Numéro de dépôt: 14197038.4
(22) Date de dépôt: 09.12.2014
(51) Int. Cl.: B01J 35/02, B01J 37/00, B01J 35/00

(54) **Extrusion helicoïdale de supports catalytiques multiobes dissymetriques**

(30) Priorité: 19.12.2013 FR 1363010
(71) Demandeur: IFP Energies nouvelles, 92852 Rueil-Malmaison Cedex (FR)
(72) Inventeur: Bazer-Bachi, Frederic, 69540 Irigny (FR); Haroun, Yacine, Davis, California 95616 (US); Digne, Mathieu, 69007 Lyon (FR); Le Corre, Vincent, 92852 Rueil-Malmaison (FR)

(57) **Abrégé**

L'invention concerne un support de catalyseur de section multilobée dissymétrique sous forme d'extrudé hélicoïdal ayant un pas de rotation compris entre 10 et 180 °par mm.

L'invention concerne également un catalyseur, une masse de captation ou un adsorbant comprenant ledit support.

L'invention concerne également le procédé de préparation dudit support de catalyseur sous forme d'extrudés hélicoïdaux.

## Description

### DOMAINE DE L'INVENTION

L'invention concerne le domaine de la préparation de supports catalytiques par extrusion.

### ARRIERE-PLAN TECHNOLOGIQUE

Les supports catalytiques préparés par extrusion ont fait l'objet de nombreuses publications.

De nombreux brevets ont ainsi été déposés avec pour objectif de protéger des formes de supports catalytiques, généralement une section en deux dimensions extrudée ensuite axialement sur toute sa longueur. Par exemple, le brevet CN 1045400C décrit une forme quadrilobée dissymétrique faisant partie des formes dites en "ailes de papillon".

Parmi les avantages revendiqués de ces nouvelles formes, sont notamment mentionnés le gain en efficacité catalytique, une moindre perte de charge du lit catalytique, une densité de chargement plus faible, potentiellement également une amélioration de la résistance mécanique.

Les formes déposées sont généralement des formes bidimensionnelles, avec une symétrie axiale de l'extrudé.

Il est parfois envisagé de faire effectuer une rotation à la forme, avec plusieurs avantages potentiels : l'augmentation du ratio surface sur volume permet par exemple une meilleure diffusion, et une meilleure efficacité catalytique. Par ailleurs, la densité de chargement diminue, la perte de charge dans le lit catalytique également.

Le brevet US 4673664 décrit par exemple des extrudés hélicoïdaux de section trilobée ou quadrilobée. Les avantages décrits dans le document, pour des formes multilobées symétriques, portent principalement sur le gain potentiel en perte de charge.

La demande de brevet WO12084788 décrit par ailleurs un procédé d'extrusion hélicoïdale de particules ayant des sections de formes multilobées, trilobes ou multilobes.

Le brevet US4673664 souligne cependant des problèmes de résistance mécanique, notamment en termes de résistance à l'écrasement, liés à l'extrusion hélicoïdale de composés ayant une section multilobée, par rapport à une extrusion axiale.

De manière surprenante, la demanderesse a au contraire découvert que l'extrusion hélicoïdale de formes multilobées asymétriques, notamment quadrilobées, avec un pas de rotation contrôlé, permettait de résoudre les problèmes de résistance mécanique soulevés dans l'art antérieur tout en obtenant des surfaces spécifiques importantes et des activités catalytiques améliorées.

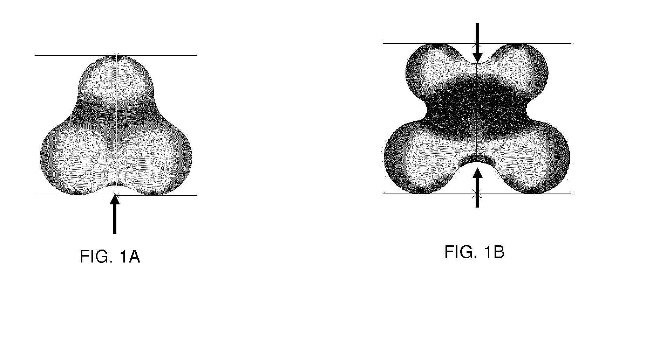

Les formes dissymétriques présentent en effet, par rapport aux formes symétriques, des points faibles bien localisés en terme de résistance mécanique (Figures 1A et 1B). La résistance à l'écrasement peut être notamment caractérisée par la technique d'écrasement grain à grain (EGG).

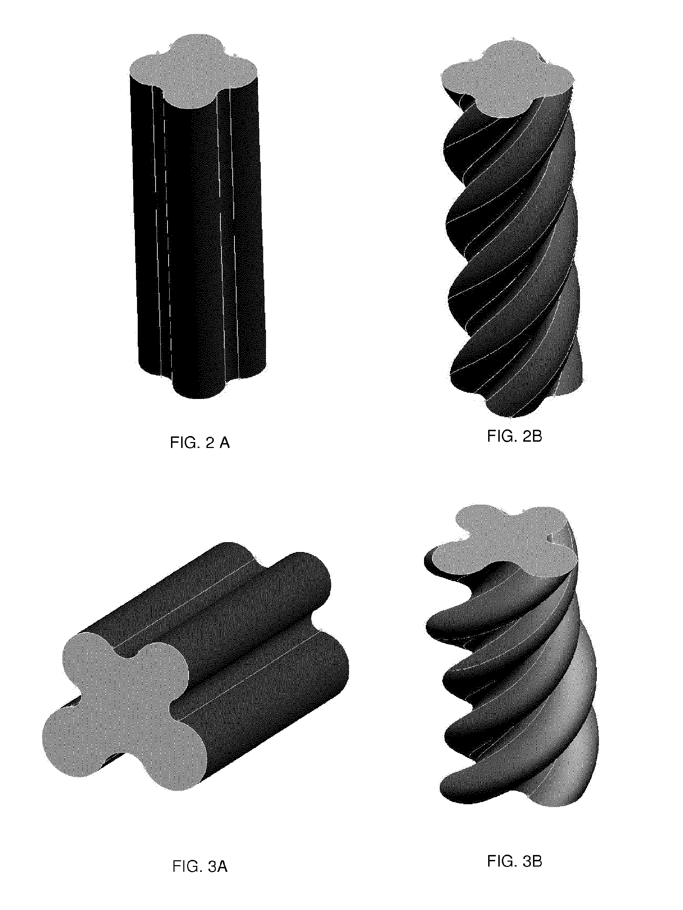

Une rotation de la forme multilobée suivant la hauteur par extrusion hélicoïdale a pour conséquence de déplacer les points de faiblesse du support latéralement autour du catalyseur (Figures 2A et 3A à comparer respectivement aux Figures 2B et 3B). Un exemple d'un quadrilobe dissymétrique avec une extrusion hélicoïdale est présenté sur la figure 3B. Lorsqu'un grain de support hélicoïdal est soumis à un poids sur un de ses côtés, il devient ainsi possible de s'assurer que ce poids ne touche pas uniquement le point faible de la section sur toute la hauteur, avec donc un fort risque de casse, mais que ce poids touche en alternance une partie faible et une partie résistante de l'extrudé (Figure 1B et 3B). Une meilleure résistance mécanique globale des extrudés est ainsi obtenue, ce qui permet notamment de rapprocher la résistance mécanique d'un catalyseur hélicoïdal de celle d'un catalyseur droit.

La demanderesse a ainsi découvert que, outre la résolution des problèmes mécaniques de l'art antérieur, l'extrusion hélicoïdale avec un pas de rotation contrôlé, d'un support de catalyseur dont la section est multilobée, de préférence quadrilobée, et dissymétrique donnait lieu à des résultats catalytiques inattendus.

### DESCRIPTION DE L'INVENTION

### Résumé de l'invention

L'invention concerne un support de catalyseur de section multilobée dissymétrique sous forme d'extrudé hélicoïdal ayant un pas de rotation compris entre 10 et 180 ° par mm, bornes incluses.

De préférence, le pas de rotation est compris entre 20 et 135 ° par mm, bornes incluses.

Dans un mode de réalisation, le rapport entre la longueur de l'extrudé L et le diamètre équivalent dudit extrudé D est supérieur ou égal à 2 (L/D>=2) et le pas de rotation est compris entre 20 et 90 °/mm, bornes in cluses.

Dans un autre mode de réalisation, le rapport entre la longueur de l'extrudé L et le diamètre équivalent dudit extrudé D est inférieur ou égal à 2 (L/D<=2) et le pas de rotation est compris entre 60 et 135 °/mm, bornes incluses.

De préférence, la section est quadrilobée.

L'invention concerne également un catalyseur comprenant un support tel que décrit précédemment.

Ledit catalyseur peut comprendre une phase active imprégnée sur ledit support.

L'invention concerne également l'utilisation dudit support comme masse de captation.

L'invention concerne également l'utilisation dudit support comme adsorbant.

L'invention concerne enfin un procédé de préparation d'un support de catalyseur sous forme d'extrudés hélicoïdaux tel que décrit ci-dessus comprenant :
a) la préparation d'une pâte pour l'extrusion ;
b) l'alimentation de la pâte dans une extrudeuse à filière multilobée dissymétrique rotative réglée avec un pas de rotation tel que le pas de rotation obtenu soit de 10 à 180° par mm ou l'alimentation de la pâte dans une extrudeuse à filière multilobée dissymétrique hélicoïdale ayant un pas de rotation tel que le pas de rotation obtenu soit de 10 à 180°par mm ;
c) l'expulsion d'extrudés hélicoïdaux de support de catalyseur.

### Liste des figures

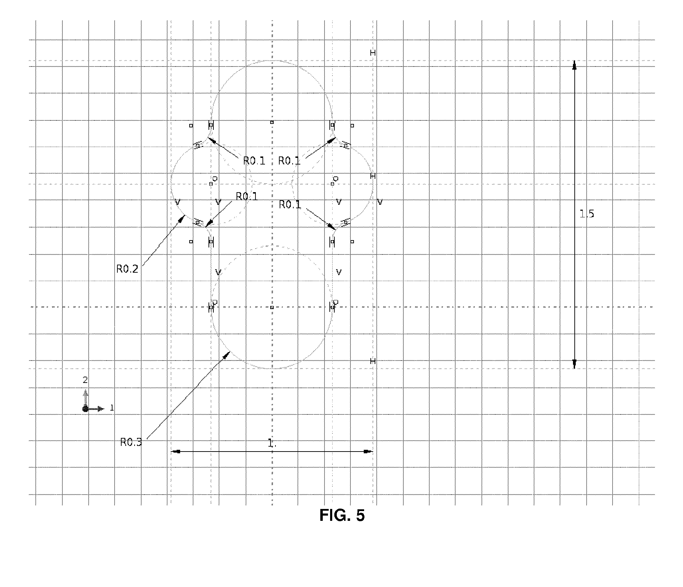

Les figures 1 à 8 sont présentées à titre illustratif et ne limitent aucunement la portée de l'invention.
La figure 1 représente deux exemples de modélisation de la répartition des résistances à la contrainte pour des formes bidimensionnelles : pour une forme trilobée symétrique classique (Figure 3A) et une forme quadrilobée dissymétrique (Figure 3B). Les zones rouge foncé indiquées par une flèche sur la figure correspondent aux zones de plus forte contrainte.
La figure 2 représente deux exemples d'extrudés de section quadrilobe symétrique : un extrudé axial ou droit (Figure 2A) et un extrudé hélicoïdal (Figure 2B).
La figure 3 représente deux exemples d'extrudés de section quadrilobe dissymétrique : un extrudé axial ou droit (Figure 3A) et un extrudé hélicoïdal (Figure 3B).
La figure 4 représente la géométrie d'une section d'extrudé de forme quadrilobe dissymétrique, dite en ailes de papillon. R1 et S1 représentent respectivement le rayon et l'aire des deux grands lobes. R2 et S2 représentent respectivement le rayon et l'aire des deux petits lobes. R3, R4 et R5 sont les rayons de courbure des arcs de raccordement entre les lobes. L1, L2 et L3 sont les longueurs caractéristiques de la section d'extrudé.
La figure 5 représente la géométrie d'une section d'extrudé de forme quadrilobe dissymétrique particulière, ayant deux petits lobes de rayon identique, deux grands lobes de rayon identique, les centres des grands lobes étant non équidistants à la ligne joignant les centres des cercles circonscrits aux petits lobes, et caractérisée par:
   - ses longueurs caractéristiques : longueur l=1,5 et largeur L=1 ;
   - le rayon des deux lobes les plus petits (R=0,2) ;
   - le rayon des deux lobes les plus grands (R=0,3) ;
   - le rayon de courbure des arcs de raccordement entre les lobes(R=0,1).
La figure 6 représente le maillage d'un extrudé hélicoïdal de section quadrilobée dissymétrique telle que définie à la figure 5, pour identifier les zones de plus fortes contraintes par la technique de modélisation par éléments finis.
La figure 7 représente les résultats de la simulation d'écrasement et la répartition des contraintes dans l'extrudé :
   - pour une forme bidimensionnelle quadrilobée dissymétrique de section telle que définie à la figure 5 (Figure 7A). Les zones rouge foncé, indiquées par une flèche, correspondent aux zones de plus forte contrainte Smax.
   - pour un extrudé hélicoïdal tridimensionnel de section telle que définie à la figure 5 (Figure 7B). Les zones rouge foncé indiquées par une flèche, correspondent aux zones de plus forte contrainte Smax.

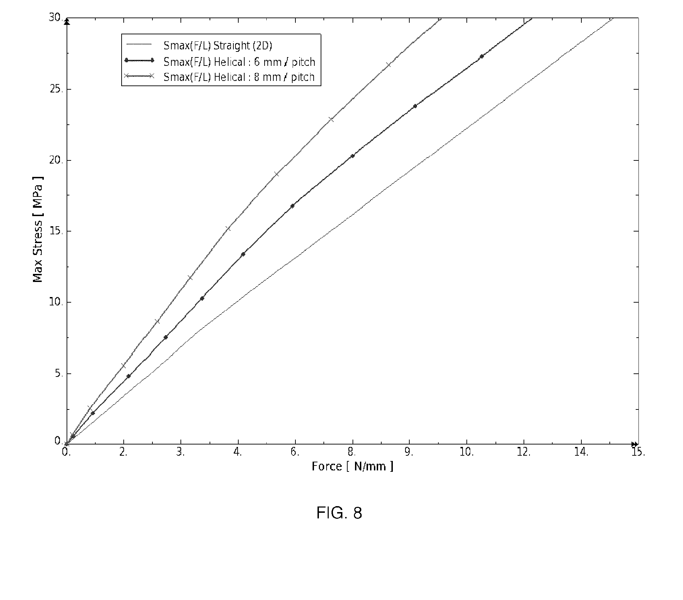

La figure 8 représente les résultats de résistance à l'écrasement de trois types d'extrudés, à savoir la contrainte maximale de traction atteinte au sein de l'extrudé lors d'un test d'écrasement par la technique de l'écrasement grain à grain (EGG). Le graphique représente la contrainte maximale (Max Stress en MPa) en fonction de la force appliquée sur l'extrudé (Force en N/mm) pour :
   - un extrudé droit (extrusion axiale) de section telle que définie à la figure 5
   - un extrudé hélicoïdal (extrusion hélicoïdale) de section telle que définie à la figure 5 et ayant un pas de rotation de 60°/mm (6 mm pour une rotation complète)
   - un extrudé hélicoïdal (extrusion hélicoïdale) de section telle que définie à la figure 5 et ayant un pas de rotation de 45°/mm (8 mm pour une rotation complète).

### Description détaillée de l'invention

L'invention propose ainsi de mettre en oeuvre une extrusion hélicoïdale contrôlée, pour une forme dissymétrique, le pas de la rotation hélicoïdale étant choisie en fonction de la nature de la forme dissymétrique, notamment de son nombre de lobes, et de son nombre de points faibles.

Les extrudés ainsi obtenus permettent de résoudre les problèmes de résistance mécanique soulevés dans l'art antérieur en maintenant une résistance mécanique globale équivalente, ou du moins sans baisse significative, par rapport à celle qui serait obtenue pour des formes droites tout en obtenant des propriétés catalytiques inattendues.

Ainsi, de manière surprenante, des évaluations de surface extérieure ont montré qu'une particule dissymétrique, définie comme une forme possédant au moins un lobe de taille différente des autres, et soumise à une rotation, voit sa surface augmenter relativement plus qu'une particule symétrique.

A volume de grain équivalent, une surface extérieure plus grande est ainsi développée.

### Formes concernées

L'invention concerne des formes multilobées dissymétriques, c'est à dire des sections multilobées ayant au moins un lobe plus grand qu'au moins un autre, avantageusement définies comme des formes multilobées dans lesquelles au moins un des lobes a une aire 10% supérieure à celle du plus petit des autres lobes, de préférence 20%, de manière très préférée 30%, et de manière encore plus préférée 40%. L'aire d'un lobe est définie comme la surface de l'ellipse circonscrite au lobe.

Les formes multilobées peuvent être trilobés, de préférence quadrilobes.

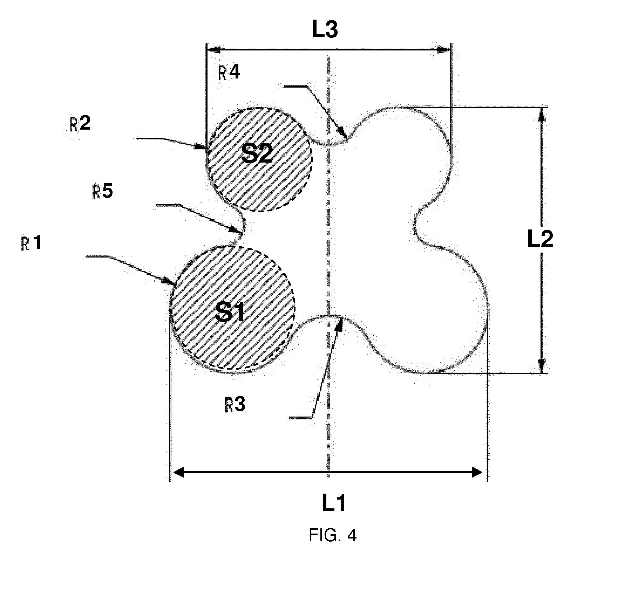

Des exemples de formes quadrilobes dissymétriques incluent notamment la forme type "ailes de papillon" de section telle que définie à la figure 4 ("Butterfly"), ou d'autres formes quadrilobes dissymétriques, par exemple de section telle que définie à la figure 5.

L'augmentation relative de la surface apportée par l'extrusion hélicoïdale de formes multilobées dissymétriques est très importante (Figure 3B).

### Extrusion hélicoïdale

L'extrudeuse est alimentée par la pâte constituant le support à extruder.

Ladite pâte peut être préparée par toute méthode connue de l'homme du métier et peut être obtenue à partir d'une ou plusieurs poudres d'oxydes (par exemple, alumine, silice, titane, zircone, ou des oxydes mixtes formés à partir de ces oxydes), d'eau, d'acide et/ou de bases minérales. Des additifs organiques ou minéraux peuvent être ajoutés dans la formulation pour faciliter la formation de la pâte et son extrusion.

La pâte peut être obtenue par toute méthode connue de l'homme du métier et de manière préférentielle par malaxage. Différents outils de malaxage sont potentiellement utilisables et le passage du malaxage à l'extrusion peut se faire de manière discontinue ou continue.

L'extrusion se fait de manière hélicoïdale, c'est à dire en faisant effectuer une rotation à la filière d'extrusion ou en utilisant une filière de forme hélicoïdale.

Selon l'invention, l'hélicoïdalité est contrôlée, en ce sens qu'elle est fonction du nombre de points de faiblesse de la forme. Par exemple, il sera possible de définir par modélisation le nombre de points de faiblesse de la forme multilobée envisagée et leur localisation, puis de définir un pas de rotation permettant de diminuer l'impact de ces points de faiblesse sur la résistance mécanique globale de l'extrudé.

Par ailleurs, le choix du pas de rotation peut se faire également en fonction de la longueur L et du diamètre équivalent D de l'extrudé final envisagé, notamment en fonction du rapport L/D.

Au final, sur l'extrudé obtenu, le pas de rotation de la forme se traduit par un pas compris entre 10°/mm et 180°/mm, de préférence comp ris entre 20 et 135°/mm, de manière encore plus préférée compris entre 20 et 90°/mm, le pas de rotation étant le rapport de l'angle de rotation de la section par rapport à la longueur de l'extrudé.

En fonction de la longueur de l'extrudé L et de son diamètre D, il est également possible d'optimiser le pas de rotation : de préférence, pour des rapports L/D supérieurs ou égaux à 2, on utilisera un pas de rotation compris entre 20 et 90°/mm, pour des rapports L/D inférieurs ou égaux à 2, on utilisera plutôt un pas de rotation compris entre 60 et 135°/mm.

### Applications des supports selon l'invention

Les extrudés de support selon l'invention peuvent être utilisés pour la préparation de catalyseurs supportés ou massiques, ou de masses de captations, ou d'adsorbants, notamment dans le domaine du raffinage et de la pétrochimie. Ces extrudés sont notamment utilisables dans les réactions où des limitations diffusionnelles interviennent : prétraitement FCC, HCK, hydrodémétallation, hydrogénations sélectives...

### EXEMPLES

### Exemple 1 : Gain en surface développée par extrusion hélicoïdale d'une forme multilobée dissymétrique.

Cet exemple fait référence aux figures 2A et 2B (selon l'art antérieur) et aux figures 3A et 3B (selon l'invention).

Par modélisation, on fait effectuer une rotation à une forme de section quadrilobe permettant de simuler une extrusion hélicoïdale de forme multilobée symétrique (figures 2A et 2B) ou dissymétrique (figures 3A et 3B).

**Tableau 1 : Extrusion hélicoïdale d'une forme multilobée symétrique**

| | Quadrilobe symétrique (Figures 2A et 2B) | | |
|---|---|---|---|
| Rotation (°) | 0° | 360°/4mm | Gain |
| V (m3) | 7.17E-09 | 7.17E-09 | 11% |
| S (m2) | 2.53E-05 | 2.81E-05 | |
| 6V/S | 1.70E-03 | 1.529E-03 | |

**Tableau 2 : Extrusion hélicoïdale d'une forme multilobée dissymétrique**

| | Quadrilobe dissymétrique (Figures 3A et 3B) | | |
|---|---|---|---|
| Rotation (°) | 0° | 360°/4mm | Gain |
| V (m3) | 1.01E-08 | 1.01E-08 | 25.43% |
| S (m2) | 3.56E-05 | 4.46E-05 | |
| 6V/S | 1.70E-03 | 1.35E-03 | |

Cet exemple montre que le gain en surface développée permis par une rotation hélicoïdale est plus importante pour un extrudé polylobé dissymétrique (+25,4%) que pour un extrudé polylobé symétrique (+11%), pour un même pas de rotation et un même rapport V/S de l'extrudé droit correspondant.

### Exemple 2 : Propriétés mécaniques des extrudés hélicoïdaux

Pour une forme de section quadrilobe dissymétrique telle que représentée sur la figure 5, trois géométries d'extrudés sont comparées par modélisation : extrudé droit, extrudé hélicoïdal à 45°/mm (8 mm/pas) et extrudé hélicoïdal à 60°/mm (6 mm/pas).

Le critère de comparaison est la contrainte maximale de traction atteinte au sein de l'extrudé lors d'un test d'écrasement (Écrasement grain à grain EGG).

Pour chaque calcul, le modèle est constitué d'un extrudé solide élastique en contact avec deux plateaux rigides. Un plateau est fixe et l'autre, mobile, sert à appliquer la force d'écrasement.

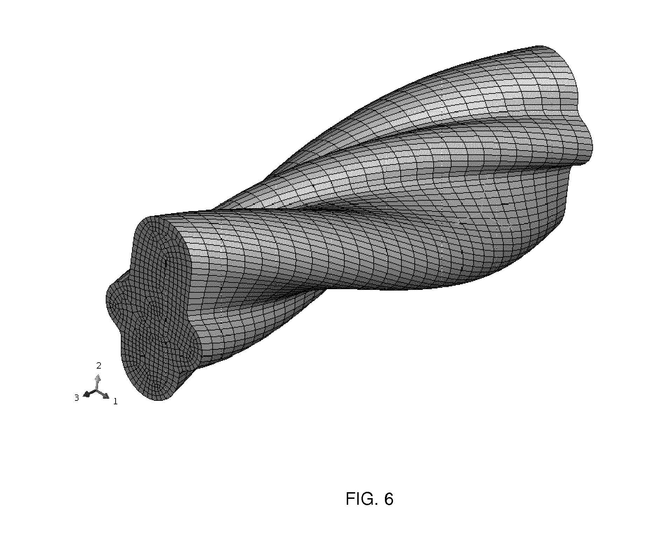

Les calculs effectués sont des calculs numériques 2D et 3D par la méthode des Éléments-Finis (Finite Element Methode (FEM)) après maillage de la forme bidimensionnelle ou de l'extrudé tridimensionnel hélicoïdal (Figure 6).

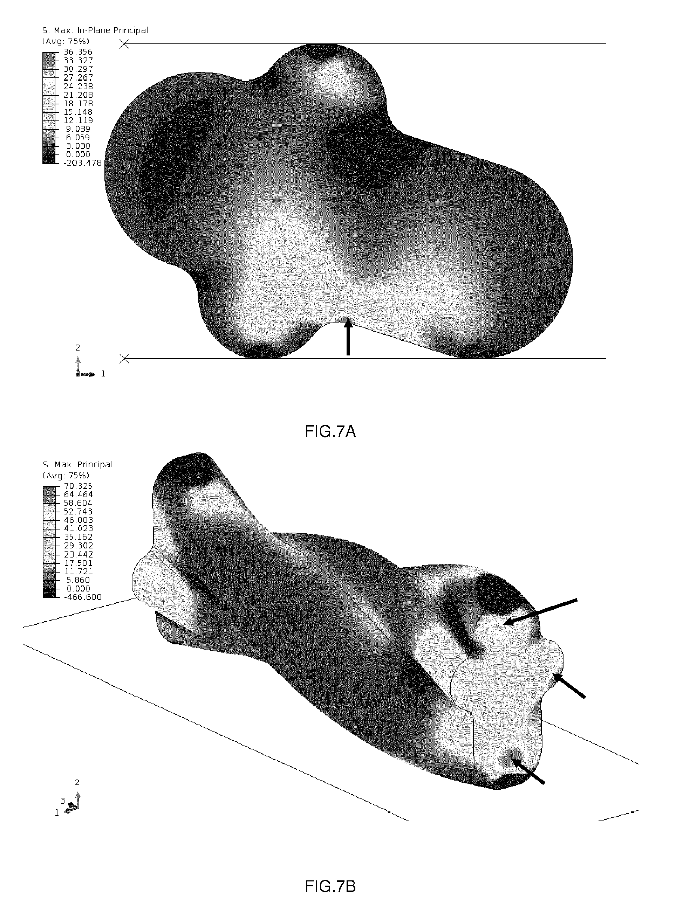

Les résultats de la modélisation montrent que la position de la contrainte maximale est très différente dans les extrudés hélicoïdaux par rapport à la forme 2D initiale (Figures 7A et 7B).

Par ailleurs, pour une contrainte à la rupture donnée de 27 MPa, les résultats montrent (Figure 8) que :
- la force correspondant à l'EGG de l'extrudé droit (Smax(F/L) Straight 2D) est de 1.3daN/mm.
- la force correspondant à l'EGG de l'extrudé hélicoïdal à 45°/mm (Smax(F/L) Helical 8 mm/pitch) est de 0.85daN/mm.
- la force correspondant à l'EGG de l'extrudé hélicoïdal à 60°/mm (Smax(F/L) Helical 6 mm/pitch) est de 1.05daN/mm.
Ainsi, plus la rotation de la forme est forte, plus on se rapproche de la résistance d'un extrudé droit.

Par ailleurs, il apparaît que la résistance des extrudés hélicoïdaux est moins sensible au congé de raccordement entre les lobes.

L'exemple 2 montre donc que de manière inattendue la résistance mécanique d'extrudés hélicoïdaux de section polylobée dissymétrique se rapproche de celle des extrudés droits. En effet, bien que la résistance à l'écrasement (caractérisée par l'EGG) soit légèrement inférieure à celle des extrudés droits, la position de la contrainte maximale est très différente, tant en position qu'en intensité, dans les extrudés hélicoïdaux. Statistiquement, la résistance mécanique du lit d'extrudés s'en trouve donc améliorée et est quasi équivalente à celle d'un lit d'extrudés droits.

### Exemple 3 : Activité catalytique en conversion

Un support à base d'alumine est préparé de manière à pouvoir préparer des catalyseurs avec différentes formes. Pour ce faire, une boehmite (ou gel d'alumine) selon le procédé décrit dans le brevet US 4,154,812. Le réacteur est chauffé à 65 °C. Avant la phase d'ajout simultanée des deux réactifs, environ 8 g équivalent Al₂O₃ sont introduits dans un volume de 1290 mL.

Pendant la phase d'ajout simultanée des deux réactifs, le pH est maintenu à une valeur voisine de 9. A la fin de l'ajout, 144 g équivalent Al₂O₃ sont versés pour un volume total de 3530 mL. La boehmite en suspension ainsi obtenue est filtrée, lavée de manière à éliminer les impuretés et séchée à 120 °C pendant une nuit pour obtenir un gel. Ce gel est ensuite mélangé à une solution aqueuse contenant de l'acide nitrique à 52,7% (1 % poids d'acide par gramme de gel sec), puis malaxé pendant 20 minutes dans un malaxeur à bras en Z, afin d'obtenir une pâte. La pâte est ensuite mélangée avec une solution aqueuse contenant de l'ammoniaque à 20,3% (40 % mol d'ammoniaque par mole d'acide) pendant 5 minutes dans le même malaxeur. A l'issue de ce malaxage, la pâte obtenue est divisée en quatre lots : chaque lot est mis en forme sur une extrudeuse piston à travers une filière ayant un orifice d'une géométrie déterminée pour obtenir les formes d'extrudés voulues. Les extrudés sont ensuite séchés une nuit à 120°C puis calcinés à 700°C pendant deux heures sous un débit d'air humide contenant 200 g d'eau / kg d'air sec.

On obtient ainsi des extrudés de forme variable, ayant une surface spécifique de 210 m²/g, un volume poreux total de 0,80 ml/g, une distribution de mésopores centrée sur 13 nm (dp à Vméso/2). Cette alumine contient en outre 0,20 ml/g de volume poreux dans les pores de diamètre supérieur à 50 nm (volume macroporeux), c'est à dire un volume macroporeux égal à 25 % du volume poreux total.

Les supports ainsi obtenus sont imprégnés à sec de la manière suivante : la solution aqueuse de l'imprégnation contient des sels du molybdène, du nickel ainsi que de l'acide phosphorique (H₃PO₄) et de l'eau oxygénée (H₂O₂). Le sel de molybdène est l'heptamolybdate d'ammonium Mo₇O₂₄(NH₄)₆.4H₂O et celui du nickel est le nitrate de nickel Ni(NO₃)₂.6H₂O. Les quantités de chacun de ces sels en solution sont déterminées de manière à déposer la quantité désirée de chaque élément dans le catalyseur.

Après maturation à température ambiante dans une atmosphère saturée en eau, les extrudés du support imprégné sont séchés une nuit à 120°C, puis calcinés à 500°C durant 2 heures sous air. La teneur en trioxyde de molybdène est de 6% poids, celle en oxyde de nickel est de 1,5% poids, et celle du pentaoxyde de phosphore est de 1,2% poids. Le rapport atomique P/Mo est égal à 0,4 et le rapport atomique Ni/Mo est égal à 0,49.

Les filières utilisées ne présentent qu'un seul trou : elles sont fabriqués en carbure de tungstène. Elles se présentent sous la forme d'un disque de 3 cm de diamètre et d'une épaisseur d'environ 4 mm dans la partie centrale. Le trou est découpé par usinage au centre de la filière de manière à avoir la forme et le diamètre de l'extrudé désiré.

On fait effectuer une rotation à la filière, selon le pas de rotation envisagé sur l'extrudé final.

Quatre catalyseurs ont été fabriqués :
- C1 (comparatif) : un catalyseur quadrilobe symétrique de filière 1,8 mm, de longueur 4 mm, extrudé axialement ;
- C2 (comparatif) : un catalyseur quadrilobe dissymétrique "ailes de papillon" de diamètre de filière 2,5 mm, de longueur 4 mm, (la taille de la filière du quadrilobe "ailes de papillon" a été ajustée pour avoir un rapport volume/surface V/S équivalent au quadrilobe symétrique), avec une section telle que représentée sur la Figure 4, extrudé axialement dont les caractéristiques géométriques sont les suivantes :

| **R1/R2** | R1/R3 | R1/R4 | R1/R5 | **L1/L2** |
|---|---|---|---|---|
| **1.20** | 1.43 | 2.14 | 3.00 | **1.20** |

- C3 (comparatif) : un catalyseur quadrilobe symétrique hélicoïdal, de même taille que la référence symétrique axiale, extrudé hélicoïdalement avec un pas de rotation de 90°/mm ;
- C4 (selon l'invention) : un catalyseur quadrilobe dissymétrique "ailes de papillon" hélicoïdal, de diamètre de filière 2,5 mm et de même longueur 4 mm (la taille de la filière du quadrilobe "ailes de papillon" a été ajustée pour avoir un V/S équivalent au quadrilobe symétrique, et donc a priori une même activité catalytique), avec une section telle que représentée sur la Figure 4, extrudé hélicoïdalement, avec un pas de rotation de 90°/mm.

Les catalyseurs C1 à C4 ont été imprégnés avec une phase active CoMoNiP avec 6% MoO3.

Les taux de vide sont équivalents lors des quatre remplissages (environ 41 %), donc la densité de chargement est la même.

Les essais ont été menés dans un réacteur de laboratoire. Le réacteur est un réacteur en lit fixe de prétraitement d'un mélange de résidu atmosphérique (AR) et de résidu sous vide (VR), à 50/50 % massique.

La température est de 390°C, la pression de 180 bar s.
Le rapport entre la hauteur et le diamètre du réacteur H/D est égal à 3.
La pph (débit massique par masse de catalyseur) est de 1,4 h⁻¹.

Les expériences ont montré :
- des conversions en hydrodémétallation HDM proches pour les deux catalyseurs non hélicoïdaux C1 et C2 : 79,4 et 79,2% respectivement pour le quadrilobe symétrique et le quadrilobe dissymétrique "ailes de papillon" ;
- une conversion en hydrodémétallation HDM de 81,7% pour le quadrilobe symétrique hélicoïdal C3 ;
- une conversion en hydrodémétallation HDM de 84,1% pour le quadrilobe dissymétrique "ailes de papillon" hélicoïdal C4 (conforme à l'invention).

Les résultats inattendus obtenus en conversion pour le catalyseur conforme à l'invention montrent l'intérêt d'effectuer une rotation contrôlée pour une forme dissymétrique : sans vouloir être lié par une quelconque théorie, il semblerait que le gain relatif en conversion soit lié au moins en partie à la plus forte augmentation relative de la surface externe.

**Tableau 3 : Données et résultats catalytiques en conversion des catalyseurs C1 à C4**

| | | Section quadrilobée dissymétrique | | Section quadrilobée symétrique | |
|---|---|---|---|---|---|
| | | Axial C2 (comp.) | Hélicoïdal C4 (selon l'invention) | Axial C1 (comp.) | Hélicoïdal C3 (comp.) |
| Volume (V) | (m3) | 1.01E-08 | 1.01E-08 | 7.17E-09 | 7.16E-09 |
| Surface (S) | (m2) | 3.56E-05 | 4.46E-05 | 2.53E-05 | 2.81 E-05 |
| 6V/S | (m) | 1.70E-03 | 1.36E-03 | 1.70E-03 | 1.53E-03 |
| PPH | (1/h) | 1.41 | 1.41 | 1.41 | 1.41 |
| **Conversion (X)** | **(-)** | **79.26%** | **84.10%** | **79**.**29**% | **81.72%** |

Les exemples 1 à 3 montrent l'intérêt de mettre en oeuvre des extrudés hélicoïdaux ayant une section multilobée dissymétrique. Une activité catalytique améliorée est ainsi obtenue, tout en maintenant une résistance mécanique tout à fait satisfaisante par rapport à des extrudés droits.

## Revendications

1. Support de catalyseur de section multilobée dissymétrique sous forme d'extrudé hélicoïdal ayant un pas de rotation compris entre 10 et 180 ° par mm, bornes incluses.

2. Support de catalyseur selon la revendication 1 dans lequel le pas de rotation est compris entre 20 et 135 °par mm, born es incluses.

3. Support de catalyseur selon l'une des revendications 1 ou 2 dans lequel le rapport entre la longueur de l'extrudé L et le diamètre équivalent dudit extrudé D est supérieur ou égal à 2 (L/D>=2) et le pas de rotation est compris entre 20 et 90 °/mm, bornes incluses.

4. Support de catalyseur selon l'une des revendications 1 ou 2 dans lequel le rapport entre la longueur de l'extrudé L et le diamètre équivalent dudit extrudé D est inférieur ou égal à 2 (L/D<=2) et le pas de rotation est compris entre 60 et 135 °/mm, bornes incluses.

5. Support de catalyseur selon l'une des revendications précédentes dans lequel la section est quadrilobée.

6. Catalyseur comprenant un support selon l'une des revendications 1 à 5.

7. Catalyseur selon la revendication 6 comprenant une phase active imprégnée sur ledit support.

8. Utilisation du support selon l'une des revendications 1 à 5 comme masse de captation.

9. Utilisation du support selon l'une des revendications 1 à 5 comme adsorbant.

10. Procédé de préparation d'un support de catalyseur sous forme d'extrudés hélicoïdaux selon l'une des revendications 1 à 5 comprenant :
a) la préparation d'une pâte pour l'extrusion ;
b) l'alimentation de la pâte dans une extrudeuse à filière multilobée dissymétrique rotative réglée avec un pas de rotation tel que le pas de rotation obtenu soit de 10 à 180° par mm ou l'alime ntation de la pâte dans une extrudeuse à filière multilobée dissymétrique hélicoïdale ayant un pas de rotation tel que le pas de rotation obtenu soit de 10 à 180°par mm ;
c) l'expulsion d'extrudés hélicoïdaux de support de catalyseur.
